# EUROPEAN PATENT SPECIFICATION

(11) **EP 0 499 723 B1**
(45) Date of publication and mention of the grant of the patent: **16.07.1997**
(21) Application number: 91203434.5
(22) Date of filing: 30.12.1991
(51) Int. Cl.: C08K 7/06, C08K 5/00

(54) **Synthetic resin mass having a low content of short carbon fibres**
Synthetische Harzmasse mit einem geringen Gehalt kurzer Carbonfasern
Composition d'une résine synthétique à basse teneur de fibres courtes de carbone

(30) Priority: 18.02.1991 NL 9100276
(43) Date of publication of application: 26.08.1992
(73) Proprietor: GE Plastics ABS Europe B.V., NL-1044 AA Amsterdam (NL)
(72) Inventor: Hol, Hubertus, GE Plastics ABS Europe B.V., NL-1044 AA Amsterdam (NL); Timmerman, Theodorus Johannus, Maria, NL-1044 AA Amsterdam (NL); Wolhoff, Kornelis Hendrikus Jacobus, NL-1044 AA Amsterdam (NL)
(74) Representative: Grever, Frederik

(56) References cited:
- EP-A- 0 032 379
- CA-A- 2 023 315
- GB-A- 1 437 314
- GB-A- 1 486 033
- GB-A- 1 570 240
- WORLD PATENTS INDEX Derwent Publications Ltd., London, GB; AN 74-86130V & JP-A-49 038 946 (DAICEL LTD) 11 April 1974

## Description

The invention relates to a thermoplastic synthetic resin mass comprising dyes and/or pigments to have a pastel colour and comprising carbon fibres. Articles molded out of the resin have a certain surface resembling some types of natural stone. More in particular, articles injection-moulded from the synthetic resin mass according to the invention show a very fine flocculent structure.

Synthetic resin masses having a particular surface structure are commercially available. Investigations have demonstrated that the known masses comprise blackened aluminium flocks.

However, the known synthetic resin masses are difficult to process; a kind of black stripe formation occurs during injection-molding. Moreover, the injection-moulding conditions must be adapted over and over again as a result of instability of the melt of the known synthetic resin mass.

After long-lasting investigations it was found that the desired result, namely a well-processable thermoplastic synthetic resin mass having a flocculent surface structure of the articles formed therefrom, could be obtained by using short carbon fibres, in a very low concentration.

The synthetic resin mass according to the invention is characterised in that it comprises 0.3-1.0% by weight of carbon fibres having a length from 1 to 6 millimetres and up to a maximum of 5% by weight of one or more of the following additives: dyes and/or pigments, stabilisers, mould- release agents, reinforcing fibres, flame retardant agents and fillers.

The content of carbon fibres is preferably 0.3-0.7, even more preferably 0.4-0.6% by weight. The length of the fibres is preferably 3-6 mm.

The synthetic resin mass comprises thermoplastic synthetic resins.

The synthetic resin mass preferably comprises a polyphenylene ether, a polystyrene, a polypropylene, an acrylonitrile-butadiene-styrene terpolymer, an aromatic polycarbonate, a polyalkylene terephthalate, a polyamide, a polyphenylene sulphide, a polyetherimide or a mixture of two or more of these polymers.

. Even more preferably the synthetic resin mass comprises an acrylonitrile-butadiene-styrene terpolymer or a polyalkylene terephthalate, for example, polybutylene terephthalate.

In addition to the carbon fibres and the synthetic resin, the synthetic resin mass may comprise up to a maximum of five procent by weight of further conventionally used additives, for example, dyes and/or pigments, stabilisers, mould-release agents, reinforcing fibres, flame-retardants and fillers. To have a pastel colour most but not all synthetic resin compositions should comprise some dyes and/or pigments. If the content of additives is above five % by weight the effect on the surface appearance of the carbon fibres is masked i.e. not visible by the additives.

The use of carbon fibres in synthetic resin masses is known per se. GB-A-1 486 033 describes a liquid coating composition comprising carbon fibres and a heavy loading of fillers. Due to the heavy loading of fillers the special appearance obtained with the mass according to the invention can not be obtained.

GB-A-1 570 240 describes a thermosetting resin composition comprising carbon fibres and textile fibres. Due to the presence of textile fibres the special appearance obtained with the mass according to the invention can not be obteined.

GB-A-1 437 314 describes a thermosetting resin composition with a high content (over 5%) of glass fibres and a high content (over 5%) of filler. Objects formed out of this composition will not show the desired surface appearance due to the high glass fibre content and due to the high content of filler.

EP-A-0 032 379 describes the preparation of films out of a polycarbonate solution which comprises carbon fibres. Polycarbonate is a colourless transparent polymer. The addition of carbon fibres to such polymers, without also adding some dyes and or pigments, does not result in the desired surface appearance.

The synthetic resin mass according to the invention is prepared by first compounding the synthetic resin and all other constituents followed by blending the carbon fibres in the melt. This can be effected e.g. by compounding the synthetic resin and the stabilisers thoroughly in a Banburry mixer or an extruder and by adding the carbon fibres shortly before the mass is taken out of the Banburry mixer or before it leaves the extruder.

The fineness of the flocculent structure may be controlled by choosing the quantity of the carbon fibres and by choosing the exact instant at which the carbon fibres are added during the preparation of the synthetic resin mass. Dependent on the compounding process chosen, the addition shortly after the melt temperature has been reached during the compounding process results in a finer flocculent structure in the final product which is obtained from the synthetic resin mass, for example, by injection-moulding.

Good results have been obtained by mixing powdered constituents based on an acrylonitrile-butadiene-styrene terpolymer and a pigment in a Banburry mixer for such a period of time until a temperature of approximately 190°C is reached. 0.5% By weight of'carbon fibres having a length of 2 mm or 4.5 mm or 6 mm were then added and the mixture was thoroughly mixed. Articles having a beautiful flocculent structure could be obtained from the synthetic resin mass thus obtained by injection-moulding.

It has been found that the mechanical properties of the synthetic resin mass and the processing possibilities of the synthetic resin mass (for example, by injection-moulding) were hardly influenced by the presence of the carbon fibres.

## Claims

1. A thermoplastic synthetic resin mass comprising dyes and/or pigments to have a pastel colour and comprising carbon fibres, characterized in that the synthetic resin mass comprises 0.3-1.0% by weight of carbon fibres having a length from 1-6 millimeters and up to a maximum of 5% by weight of one or more of the following additives: dyes and/or pigments, stabilizers, mould-release agents, reinforcing fibres flame retardant agents and fillers.

2. A synthetic resin mass as claimed in Claim 1, characterised in that the synthetic resin mass comprises 0.4-0.6% by weight of carbon fibres.

3. A synthetic resin mass as claimed in Claim 1, characterised in that the synthetic resin mass comprises carbon fibres having a length from 3-6 millimetres.

4. A synthetic resin mass as claimed in Claim 1, characterised in that the synthetic resin mass comprises a polyphenylene ether, a polystyrene, a polypropylene, an acrylonitrile-butadiene-styrene terpolymer, an aromatic polycarbonate, a polyalkylene terephthalate, a polyamide, a polyphenylene sulphide, a polyetherimide or a mixture of two or more of the said polymers.

## Patentansprüche

1. Eine thermoplastische synthetische Harzmasse, die Farbstoffe und/oder Pigmente umfaßt, um eine Pastellfarbe zu haben und Kohlenstoffasern umfassend, dadurch gekennzeichnet, daß die synthetische Harzmasse 0,3 bis 1,0 Gewichts-% Kohlenstoffasern mit einer Länge von 1-6 Millimetern und bis zu einem Maximum von 5 Gewichts-% von einem oder mehreren der folgenden Additive umfaßt: Farbstoffe und/oder Pigmente, Stabilisatoren, Formentrennmittel, Verstärkungsfasern,flammhemmende Mittel und Füllstoffe.

2. Eine synthetische Harzmasse wie in Anspruch 1 beansprucht, dadurch gekennzeichnet, daß die synthetische Harzmasse 0,4-0,6 Gewichts-% Kohlenstoffasern umfaßt.

3. Eine synthetische Harzmasse wie in Anspruch 1 beansprucht, dadurch gekennzeichnet, daß die synthetische Harzmasse Kohlenstoffasern mit einer Länge von 3-6 Millimetern umfaßt.

4. Eine synthetische Harzmasse wie in Anspruch 1 beansprucht, dadurch gekennzeichnet, daß die synthetische Harzmasse einen Polyphenylenäther, ein Polystyrol, ein Polypropylen, ein Acrylnitril-Butadien-Styrol-Terpolymer, ein aromatisches Polycarbonat, ein Polyalkylenterephthalat, ein Polyamid, ein Polyphenylensulphid, ein Polyätherimid oder eine Mischung von zweien oder mehreren der besagten Polymere umfaßt.

## Revendications

1. Masse à base de résine synthétique thermoplastique, contenant des colorants et/ou des pigments de façon à avoir une teinte pastel et contenant des fibres de carbone, caractérisée en ce que la masse à base de résine synthétique contient 0,3 à 1,0% en poids de fibres de carbone ayant une longueur de 1 à 6 mm, et jusqu'à 5% en poids au maximum d'un ou plusieurs des additifs suivants : des colorants et/ou des pigments, des stabilisants, des agents de démoulage, des fibres de renforcement, des agents retardant l'inflammation et des charges.

2. Masse à base de résine synthétique selon la revendication 1, caractérisée en ce qu'elle contient 0,4 à 0,6% en poids de fibres de carbone.

3. Masse à base de résine synthétique selon la revendication 1, caractérisée en ce qu'elle contient des fibres de carbone ayant une longueur de 3 à 6 mm.

4. Masse à base de résine synthétique selon la revendication 1, caractérisée en ce qu'elle contient un poly(oxyde de phénylène), un polystyrène, un polypropylène, un terpolymère acrylonitrile-butadiènestyrène, un polycarbonate aromatique, un poly(téréphtalate d'alkylène), un polyamide, un poly(sulfure de phénylène), un polyétherimide, ou un mélange de deux ou plus de deux des polymères précédents.
